# EUROPÄISCHE PATENTSCHRIFT

(11) **EP 3 335 940 B1**
(45) Veröffentlichungstag und Bekanntmachung des Hinweises auf die Patenterteilung: **10.07.2019**
(21) Anmeldenummer: 17203715.2
(22) Anmeldetag: 27.11.2017
(51) Int. Cl.: B60R 13/10, B62J 11/00, G09F 21/04

(54) **HALTERUNG ZUM VERANKERN EINES DOKUMENTS AN EINEM FAHRZEUG**
HOLDER FOR MOUNTING A DOCUMENT TO A VEHICLE
DISPOSITIF POUR RETENIR UN DOCUMENT À UN VÉHICULE

(30) Priorität: 19.12.2016 AT 600142016; 22.05.2017 AT 504332017
(43) Veröffentlichungstag der Anmeldung: 20.06.2018
(73) Patentinhaber: Derx, Rainer, 1130 Wien (AT)
(72) Erfinder: Derx, Rainer, 1130 Wien (AT)
(74) Vertreter: Weiser & Voith Patentanwälte Partnerschaft

(56) Entgegenhaltungen:
- DE-U1- 20 307 979
- DE-U1- 29 804 748
- GB-A- 2 493 330
- US-A1- 2014 196 332

## Beschreibung

Die vorliegende Erfindung betrifft eine Halterung zum Verankern eines sichtbar zu führenden Dokuments an einem Fahrzeug, insbesondere an einem einspurigen Kraftfahrzeug.

Vielerorts ist es notwendig bzw. gesetzlich vorgeschrieben, Dokumente an einem Fahrzeug sichtbar zu führen. Solche Dokumente sind beispielsweise Mautvignetten, Prüfplaketten (z.B. Fahrzeug- bzw. Abgas-Prüfplaketten), Berechtigungsnachweise (z.B. Park- oder Einfahrtsberechtigungen), amtliche Urkunden, Versicherungsbestätigungen od.dgl. Die Dokumente sind häufig aus Kunststoff, manchmal aus Metall(folie) oder sogar aus Papier; sie können optional elektronische Bauelemente umfassen. Ferner sind manche derartige Dokumente selbstklebend, u.zw. an ihrer Vorder- oder ihrer Rückseite, wogegen andere keine Hafteigenschaften aufweisen.

Insbesondere bei einem mehrspurigen Kraftfahrzeug kann ein Dokument der genannten Art vor Diebstahl, Vandalismus und/oder Witterung weitgehend geschützt oft im Innenraum, z.B. an der Innenseite der Windschutzscheibe, sichtbar geführt werden. Hingegen ist dies in anderen Fällen, z.B. wenn das Dokument an der Rückseite klebend ist oder bei einem offenen Fahrzeug, z.B. einspurigen Fahrzeug bzw. Kraftfahrzeug, nicht möglich oder von Gesetzes wegen anders vorgesehen. In diesen Fällen ist das Dokument an der Außenseite des Fahrzeugs in einer Weise zu verankern, dass es sichtbar ist, und dabei entsprechend zu schützen.

Außenseitig zu verankernde Dokumente werden heute meist an einem lackierten, pulverbeschichteten, eloxierten oder verchromten Fahrzeugteil angebracht. Um unerwünschte Beschädigungen oder dauerhafte Klebespuren an der Oberfläche des Fahrzeugteils beim Austauschen oder Entfernen eines Dokuments zu vermeiden, ist insbesondere für rückseitig selbstklebende Dokumente unter dem Namen FixItEasy® eine Halterung der Firma RD Handelgesellschaft aus Österreich bekannt. Diese Halterung wird z.B. an einem Gabelstandrohr eines einspurigen Kraftfahrzeugs klebstofffrei und sicher montiert und bietet eine ebene Fläche zum Aufkleben des Dokuments. Dabei bleibt das Dokument den Witterungsbedingungen und dem direkten Zugriff vom außen ausgesetzt und könnte folglich beschädigt oder - je nach Klebstoff - zumindest teilweise abgelöst werden. Das Dokument GB24933330 A zeigt in einem Ausführungsbeispiel eine über ein Scharnier klappbare Halterung zum Verankern eines sichtbar zu führenden Dokuments mit einer durch einen Vorsprung angepressten Dichtung in einem umlaufenden Dichtsitz.

Die Erfindung setzt sich zum Ziel, eine Halterung für ein Dokument zu schaffen, welche dieses zuverlässig vor äußeren Einflüssen schützt.

Dieses Ziel wird mit einer Halterung der einleitend genannten Art erreicht, welche sich auszeichnet durch die Kombination aus:
einem Trägerteil mit einer Trägerplatte und einer Befestigungsmanschette zum Montieren des Trägerteils an einem Teil des Fahrzeugs;
einer unter Zwischenlegen des Dokuments an der Trägerplatte mithilfe einer Schnappverbindung verankerbaren Abdeckkappe mit einem transparenten Sichtfeld und einem die Trägerplatte umlaufend einfassenden Rand; und
einer zwischen Abdeckkappe und Trägerplatte einlegbaren Dichtung;
wobei die Trägerplatte in ihrem Randbereich in Richtung der Abdeckkappe abstehende Dichtstege zum Anpressen der Dichtung an die Abdeckkappe hat.

Mit der Halterung kann das Dokument dauerhaft sichtbar am Fahrzeug geführt werden und ist fest daran verankert. Trotz jederzeitiger Sichtbarkeit wird das Dokument vor direktem Zugriff von außen geschützt. Der umlaufende Rand, die Dichtung und die Dichtstege halten Wettereinflüsse vom zwischen Trägerplatte und Abdeckkappe eingelegten Dokument zuverlässig fern. Die Halterung ist somit auch für Dokumente aus - nicht wasserfestem - Papier geeignet und kann in unterschiedlichen, an beliebige Dokumente - z.B. runde, rechteckige, asymmetrische - angepassten Formen hergestellt werden. Da ferner ein laterales Verschieben der Abdeckkappe gegenüber der Trägerplatte aufgrund des umlaufenden Randes unmöglich ist, wird neben dem Eindringen von Feuchtigkeit und Schmutz auch ein Eingreifen zwecks Manipulation, Diebstahls oder Vandalismus erschwert.

Besonders günstig ist es, wenn die Dichtstege einen umlaufenden Rahmen bilden. Die Halterung schafft dadurch einen besonders zuverlässig abgedichteten Bereich für das Dokument.

In einer bevorzugten Ausführungsform ist die Schnappverbindung durch innerhalb des Randes über den Umfang verteilte, von der Abdeckkappe hochragende Schnapphaken und dazu korrespondierende, außerhalb der Dichtstege liegende Schnappöffnungen in der Trägerplatte gebildet, hinter welchen die Schnapphaken unlösbar verrasten. Auf diese Weise kann das Dokument der Halterung nicht ohne Zerstörung derselben entnommen werden und ein Übertragen des Dokuments mitsamt der Halterung auf ein anderes Fahrzeug ist ausgeschlossen. Dadurch und weil die Schnapphaken innerhalb des Randes über den Umfang der Abdeckkappe verteilt sind, sodass sie nach dem Montieren des Trägerteils an dem Fahrzeugteil und dem Verankern der Abdeckkappe an der Trägerplatte schwierig oder gar nicht zugänglich sind, ist auch ein missbräuchliches Weiterverwenden des Dokuments wesentlich erschwert. Manipulation, Diebstahl und/oder Vandalismus wird dadurch weiter entgegenwirkt.

Dabei ist vorteilhaft, wenn die Schnapphaken Spreizflügel haben, welche hinter den Schnappöffnungen unlösbar verrasten. Dies führt zu einer einfach anwendbaren, besonders sicheren, nicht zerstörungsfrei lösbaren Schnappverbindung.

Zur Vereinfachung der Montage der Halterung und als Schutz gegen ein verdrehtes Verankern der Abdeckkappe an der Trägerplatte ist es günstig, wenn die Schnapphaken nicht-rotationssymmetrisch über den Umfang der Abdeckkappe verteilt sind. Auf diese Weise kann die Abdeckkappe nur in einer, nämlich der vorgesehenen Ausrichtung an der Trägerplatte verankert werden.

Bevorzugt sind die Trägerplatte und die Befestigungsmanschette einstückig aus Kunststoff gefertigt. Trägerplatte und Befestigungsmanschette sind so voneinander nicht zerstörungsfrei trennbar und dabei kostengünstig herstellbar.

Um ein Verrutschen des Dokuments beim Verankern an dem Fahrzeug und im Betrieb des Fahrzeugs zu verhindern, ist es vorteilhaft, wenn die Abdeckkappe in Richtung der Trägerplatte abstehende Führungsstege für das Dokument hat. Das Dokument bleibt auf diese Weise zuverlässig im transparenten Sichtfeld sichtbar.

In einer bevorzugten Ausführungsform umfasst die Befestigungsmanschette einen flexiblen Riemen mit Sägezähnen und eine Schließe mit einer Klinke. Die Klinke ermöglicht ein einfaches, dauerhaftes Verrasten und eine solche Befestigungsmanschette ein sicheres, an den Fahrzeugteil und seinen Umfang anpassbares Montieren des Trägerteils am Fahrzeug.

Besonders günstig ist dabei, wenn die Klinke an der von der Trägerplatte abgewandten Seite der Schließe liegt. Auf diese Weise ist die Klinke nach dem Montieren des Trägerteils an dem Fahrzeugteil nicht mehr zugänglich und die Befestigungsmanschette folglich nicht zerstörungsfrei zu öffnen, sodass die gesamte Halterung mitsamt dem Dokument nicht zerstörungsfrei vom Fahrzeug abgenommen und weiterverwendet werden kann.

Um einen besonders sicheren Sitz des Trägerteils und damit der Halterung an dem Fahrzeugteil sicherzustellen, hat bevorzugt der Riemen an seiner von der Trägerplatte abgewandten Seite ferner eine Rutschsicherung zur Anlage an dem Fahrzeugteil. Eine solche Rutschsicherung kann beispielsweise durch einen am Riemen fixierten Streifen aus Gummi realisiert sein.

Die Erfindung wird nachfolgend anhand von in den beigeschlossenen Zeichnungen dargestellten Ausführungsbeispielen näher erläutert. In den Zeichnungen zeigen:
Fig. 1 ein Fahrzeug mit einer erfindungsgemäßen Halterung für ein Dokument in einer Seitenansicht;
die Fig. 2a bis 2d Varianten eines Trägerteils der Halterung von Fig. 1 in einer ausschnittsweisen Perspektivansicht der Vorder- (Fig. 2a bzw. 2b) und der Rückseite (Fig. 2c) bzw. in einer Perspektivansicht der Rückseite im Ganzen (Fig. 2d);
die Fig. 3a und 3b eine Abdeckkappe der Halterung von Fig. 1 in einer Perspektivansicht der Vorder- (Fig. 3a) bzw. der Rückseite (Fig. 3b);
Fig. 4 ein Beispiel für einen Schnapphaken der Abdeckkappe der Fig. 3a und 3b in einer Perspektivansicht;
Fig. 5 eine Dichtung der Halterung von Fig. 1 in einer Perspektivansicht; und
Fig. 6 eine Rutschsicherung des Trägerteils von Fig. 2a bis 2d in einer Perspektivansicht.

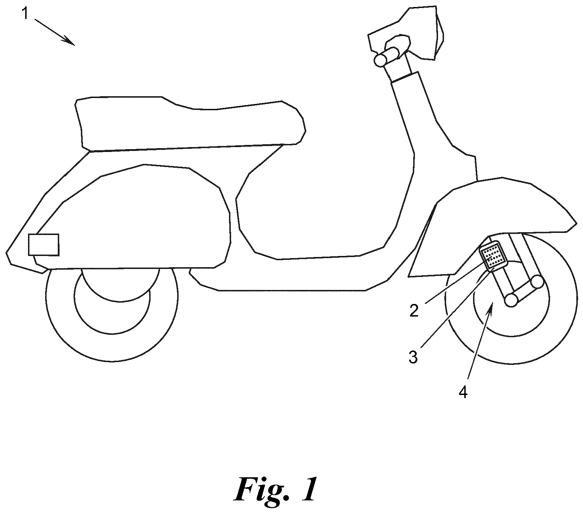

Die Fig. 1 zeigt ein Fahrzeug 1 - z.B. ein einspuriges Fahrzeug, insbesondere Kraftfahrzeug - mit einem daran sichtbar geführten Dokument 2. Das Dokument 2 ist mithilfe einer Halterung 3 an einem Fahrzeugteil 4 - hier: einem Gabelstandrohr bzw. einem Gabel- oder Lenkholm - verankert. Das Dokument 2 ist optional selbstklebend und kann z.B. aus Kunststoff, Papier und/oder Metall(folie) und dabei beschriftet und/oder elektronisch über Funk auslesbar sein. Es kann sich dabei z.B. um eine Mautvignette, eine Prüfplakette (z.B. eine Fahrzeug- bzw. Abgas-Prüfplakette), eine amtliche Urkunde, einen Berechtigungsnachweis (z.B. eine Park- oder Einfahrtsberechtigung), eine Versicherungsbestätigung od.dgl. handeln.

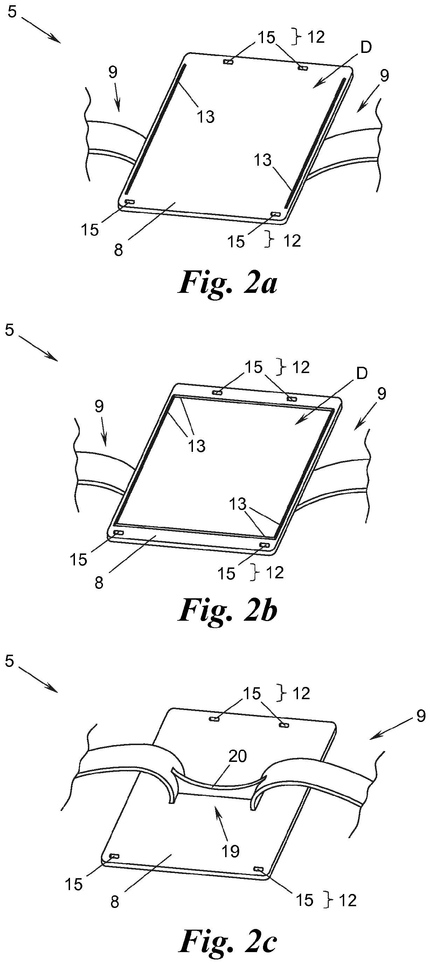

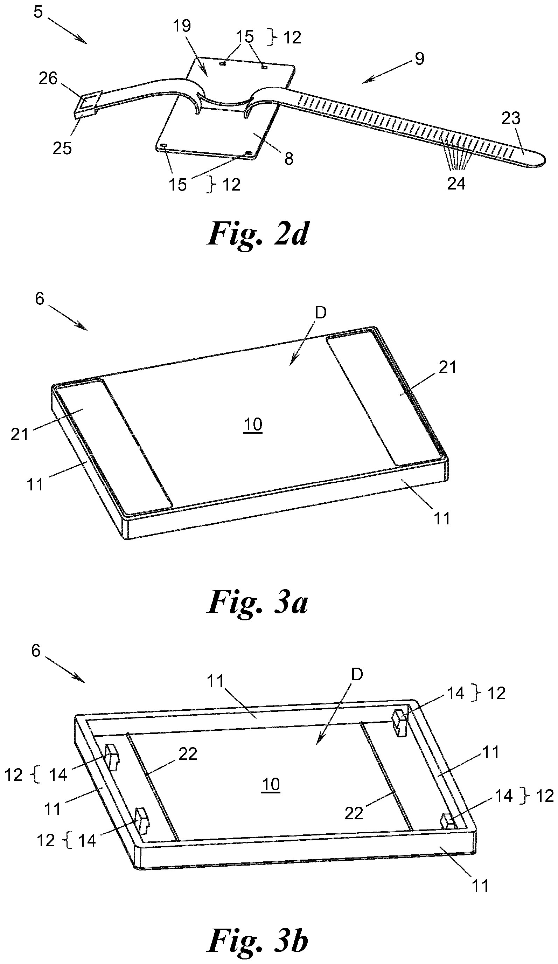

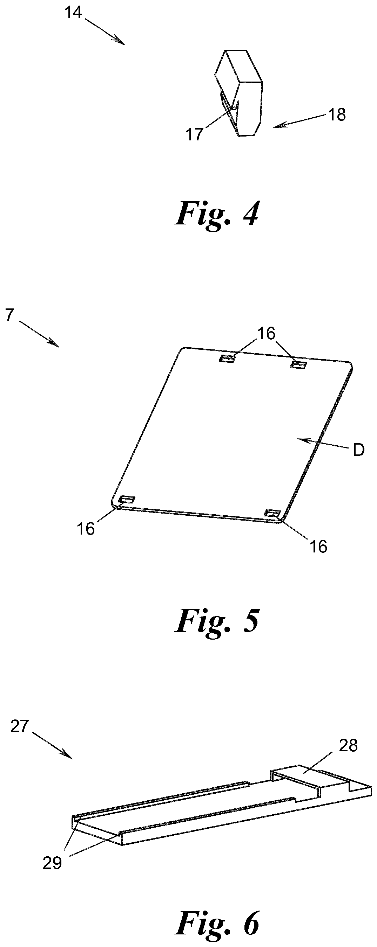

Die Fig. 2a bis 6 zeigen Teile der Halterung 3 im Einzelnen. Die Halterung 3 wird im Wesentlichen durch eine Kombination aus einem Trägerteil 5 (Fig. 2a bis 2d), einer Abdeckkappe 6 (Fig. 3a und 3b) und einer Dichtung 7 (Fig. 5) gebildet.

In den Beispielen der Fig. 2a bis 2d hat der Trägerteil 5 eine Trägerplatte 8 und eine Befestigungsmanschette 9. Mit der Befestigungsmanschette 9 wird der Trägerteil 5 an dem Fahrzeugteil 4 montiert.

Die Abdeckkappe 6 hat gemäß den Beispielen der Fig. 3a und 3b ein transparentes Sichtfeld 10 und einen umlaufenden Rand 11. Mithilfe einer Schnappverbindung 12 ist die Abdeckkappe 6 an der Trägerplatte 8 verankerbar, wobei der Rand 11 die Trägerplatte 8 umlaufend einfasst. Dabei ist ferner die Dichtung 7, welche im Beispiel der Fig. 5 plattenförmig und aus Gummi ist, zwischen Abdeckkappe 6 und Trägerplatte 8 eingelegt und dichtet dadurch einen im verankerten Zustand zwischen Abdecckappe 6 und Trägerplatte 8 gebildeten Bereich D für das Dokument 2 gegen Einflüsse von außen, insbesondere Witterungseinflüsse, ab. Es versteht sich, dass das sichtbar zu führende Dokument 2 beim Verankern der Abdeckkappe 6 an der Trägerplatte 8 in diesem geschützten Bereich D zwischengelegt wird, wobei die Dichtung 7 zwischen Trägerplatte 8 und Dokument 2 zu liegen kommt. Hat die Dichtung 7 alternativ zu dem Beispiel der Fig. 4 eine mittige Aussparung, so kann das Dokument 2 zumindest überwiegend in dieser Aussparung zwischen Trägerplatte 8 und Abdeckkappe 6 eingelegt werden.

Die Trägerplatte 8 hat in ihrem Randbereich in Richtung der Abdeckkappe 6 abstehende Dichtstege 13. Im Beispiel der Fig. 2a sind die Dichtstege bloß im seitlichen Randbereich der Trägerplatte 8 angeordnet; im dazu alternativen Beispiel der Fig. 2b bilden die Dichtstege 13 einen umlaufenden Rahmen. Jedenfalls pressen im verankerten Zustand die Dichtstege 13 die Dichtung 7 an die Abdeckkappe 6 und verstärken dadurch die Wirkung der Dichtung 7.

In den Beispielen der Fig. 2a bis 4 ist die Schnappverbindung 12 durch innerhalb des äußeren Randes 11 über den Umfang der Abdeckkappe 6 verteilte, von der Abdeckkappe 6 hochragende Schnapphaken 14 und zu den Schnapphaken 14 korrespondierende Schnappöffnungen 15 in der Trägerplatte 8 gebildet, welche außerhalb der genannten Dichtstege 13 liegen. Beim Verankern der Abdeckkappe 6 an der Trägerplatte 8 verrasten die Schnapphaken 14 hinter den Schnappöffnungen 15 unlösbar, d.h. nicht zerstörungsfrei lösbar. Wie im Beispiel der Fig. 5 gezeigt, hat die Dichtung 7 dabei zu den Schnappöffnungen 15 korrespondierende Öffnungen 16 für den Durchtritt der Schnapphaken 14.

Die Schnappverbindung 12 könnte alternativ z.B. durch am genannten Rand 11 ausgebildete, zur Trägerplatte 8 hin auskragende Schnappnasen, welche beim Verankern an der Trägerplatte 8 verrasten, od.dgl. gebildet sein (nicht dargestellt).

Die Schnapphaken 14 können wie im Beispiel der Fig. 3b sägezahnförmig sein, oder sie sind wie im Beispiel der Fig. 4 hinterschnitten, sodass daran Spreizflügel 17 gebildet sind, welche beim Verankern hinter den Schnappöffnungen 15 unlösbar verrasten. Sägezahnform bzw. Spreizflügel 17 sind in den dargestellten Beispielen einseitig an den Schnapphaken 14 ausgebildet; alternativ könnten diese Formen an den Schnapphaken 14 mehrseitig oder sogar umlaufend sein. Ferner haben die Schnapphaken 14 und die Schnappöffnungen 15 in den dargestellten Beispielen etwa rechteckigen Querschnitt; dieser könnte alternativ z.B. oval, quadratisch oder rund sein oder eine andere, insbesondere asymmetrische Form haben. Optional können die Schnappöffnungen 15 trichterförmg sein. Überdies kann an der Schnappverbindung 12, falls erforderlich, eine Sollbruchstelle 18 vorgesehen sein, um sicherzustellen, dass die Schnappverbindung 12 nicht-zerstörungsfrei lösbar ist; im Beispiel der Fig. 4 ist die Sollbruchstelle 18 durch einen sich in Richtung zur Abdecckappe 6 hin verjüngenden Querschnitt des Schnapphakens 14 gebildet. Alternative Ausgestaltungen einer Sollbruchstelle 18 sind dem Fachmann bestens bekannt.

In den Beispielen der Fig. 2a bis 3b hat die Schnappverbindung 12 vier Schnapphaken 14 bzw. Schnappöffnungen 15, von denen jeweils zwei an gegenüberliegenden Seiten der im Wesentlichen rechteckigen Abdeckkappe 6 bzw. Trägerplatte 8 angeordnet sind. Dabei sind die Schnapphaken 14 optional nicht-rotationssymmetrisch über den Umfang der Abdeckkappe 6 verteilt, z.B. indem die Schnapphaken 14 an einer Seite geringeren gegenseitigen Abstand haben als an der gegenüberliegenden Seite der Abdeckkappe 6. Dasselbe gilt für die korrespondierenden Schnappöffnungen 15 (und Öffnungen 16 der Dichtung 7). Infolgedessen kann die Abdeckkappe 6 bloß in einer einzigen Ausrichtung an der Trägerplatte 8 verankert werden, d.h. ein Verankern in gegenüber der Trägerplatte 8 verdrehter Ausrichtung ist unmöglich.

Es versteht sich, dass die Schnapphaken 14 in anderer Weise über den Umfang der Abdeckkappe 6 verteilt sein können, z.B. rotationssymmetrisch, d.h. dass die Abdeckkappe 6 in verschiedenen Ausrichtungen an der Trägerplatte 8 verankerbar ist. Ferner könnten Trägerplatte 8 und Abdeckkappe 6 nicht-rechteckig sein, z.B. rund, oval oder beliebig anders geformt.

Im Folgenden werden anhand der beispielhaften Darstellungen der Fig. 2c bis 6 weitere Ausführungsvarianten erläutert.

Gemäß dem Beispiel der Fig. 2c ist an der Befestigungsmanschette zur sicheren Befestigung des Trägerteils 5 an einem Fahrzeugteil 4 mit rundem Querschnitt optional ein Formstück 19, z.B. ein Steg mit abgerundeter Kante 20, ausgebildet.

Wie im Beispiel der Fig. 2d gezeigt, sind optional die Trägerplatte 8 und die Befestigungsmanschette 9 einstückig aus Kunststoff, insbesondere einem Witterungs- und UV-Licht-beständigen Kunststoff, gefertigt, welcher frei von Brandbeschleunigern ist und Temperaturen im Bereich von zumindest zwischen -30 und +50° Celsius ohne relevante Funktionsbeeinträchtigung oder Verformung standhält. Kunststoffe solcher Art sind dem Fachmann bekannt. Aus Kunststoff mit ebensolchen Eigenschaften ist optional auch die Abdeckkappe 6 gefertigt, welche in den Beispielen der Fig. 3a und 3b in ihrer Gesamtheit aus transparentem Kunststoff ist; alternativ könnte sie bloß im Bereich des Sichtfeldes 10 transparent sein.

Die Abdeckkappe 6 des Beispiels der Fig. 3a hat an ihrer der Trägerplatte 8 abgewandten Außenseite optionale Vertiefungen 21 neben dem Sichtfeld 10, in welche, falls gewünscht, zusätzliche Beschriftungen bzw. Aufkleber oder Schilder angebracht werden können.

Wie im Beispiel der Fig. 3b gezeigt, hat die Abdeckkappe 6 ferner optional in Richtung der Trägerplatte 8 abstehende Führungsstege 22, zwischen welchen das Dokument 2 gegen Verrutschen sicher geführt ist. Die Führungsstege 22 können wie im dargestellten Beispiel die Abdeckkappe 6 zur Gänze oder alternativ nur teilweise durchqueren.

Zurückkommend auf das Beispiel der Fig. 2d umfasst die Befestigungsmanschette 9 optional einen flexiblen Riemen 23, an welchem Sägezähne 24 ausgebildet sind, und eine Schließe 25, an welcher eine Klinke 26 ausgebildet ist. Der Riemen 23 wird beim Montieren um den Fahrzeugteil 4 gelegt und in die Schließe 25 eingeführt, wobei jeweils ein Sägezahn 24 an der Klinke 26 verrastet bis durch Festziehen des Riemens 23, d.h. Weiterziehen durch die Schließe 25 und Verrasten jeweils eines folgenden Sägezahns 24, der Trägerteil 5 festen Sitz am Fahrzeugteil 4 erlangt. Alternativ könnten die Befestigungsmanschette 9 beispielsweise durch einen gelochten Riemen und eine Schnalle, durch eine Schelle od.dgl. gebildet sein.

Im gezeigten Beispiel liegt die Klinke 26 an der von der Trägerplatte 8 abgewandten Seite der Schließe 25 und ist deshalb nach dem Montieren des Trägerteils 5 an dem Fahrzeugteil 4 unzugänglich und somit nicht zerstörungsfrei ausklinkbar.

An seiner von der Trägerplatte 8 abgewandte Seite kann der Riemen 23 optional eine Rutschsicherung 27 gemäß Fig. 6 zur Anlage an dem Fahrzeugteil 4 haben. Die Rutschsicherung 27 ist z.B. aus Gummi und kann zur Befestigung an dem Riemen 23 eine Brücke 28 haben, durch welche der Riemen 23 geschoben wird. Ferner kann die Rutschsicherung 27, falls gewünscht, zumindest abschnittsweise seitliche Stege 29 haben, welche ein Verrutschen gegenüber dem Riemen 23 weiter erschweren.

## Patentansprüche

1. Halterung zum Verankern eines sichtbar zu führenden Dokuments an einem Fahrzeug, insbesondere an einem einspurigen Kraftfahrzeug, **gekennzeichnet durch** die Kombination aus:
einem Trägerteil (5) mit einer Trägerplatte (8) und einer Befestigungsmanschette (9) zum Montieren des Trägerteils (5) an einem Teil (4) des Fahrzeugs (1);
einer unter Zwischenlegen des Dokuments an der Trägerplatte (8) mithilfe einer Schnappverbindung (12) verankerbaren Abdeckkappe (6) mit einem transparenten Sichtfeld (10) und einem die Trägerplatte (8) umlaufend einfassenden Rand (11); und
einer zwischen Abdeckkappe (6) und Trägerplatte (8) einlegbaren Dichtung (7);
wobei die Trägerplatte (8) in ihrem Randbereich in Richtung der Abdeckkappe (6) abstehende Dichtstege (13) zum Anpressen der Dichtung (7) an die Abdeckkappe (6) hat.

2. Halterung nach Anspruch 1, **dadurch gekennzeichnet, dass** die Dichtstege (13) einen umlaufenden Rahmen bilden.

3. Halterung nach Anspruch 1 oder 2, **dadurch gekennzeichnet, dass** die Schnappverbindung (12) durch innerhalb des Randes (11) über den Umfang verteilte, von der Abdeckkappe (6) hochragende Schnapphaken (14) und dazu korrespondierende, außerhalb der Dichtstege (13) liegende Schnappöffnungen (15) in der Trägerplatte (8) gebildet ist, hinter welchen die Schnapphaken (14) unlösbar verrasten.

4. Halterung nach Anspruch 3, **dadurch gekennzeichnet, dass** die Schnapphaken (14) Spreizflügel (17) haben, welche hinter den Schnappöffnungen (15) unlösbar verrasten.

5. Halterung nach Anspruch 3 oder 4, **dadurch gekennzeichnet, dass** die Schnapphaken (14) nicht-rotationssymmetrisch über den Umfang der Abdeckkappe (6) verteilt sind.

6. Halterung nach einem der Ansprüche 1 bis 5, **dadurch gekennzeichnet, dass** die Trägerplatte (8) und die Befestigungsmanschette (9) einstückig aus Kunststoff gefertigt sind.

7. Halterung nach einem der Ansprüche 1 bis 6, **dadurch gekennzeichnet, dass** die Abdeckkappe (6) in Richtung der Trägerplatte (8) abstehende Führungsstege (22) für das Dokument (2) hat.

8. Halterung nach einem der Ansprüche 1 bis 7, **dadurch gekennzeichnet, dass** die Befestigungsmanschette (9) einen flexiblen Riemen (23) mit Sägezähnen (24) und eine Schließe (25) mit einer Klinke (26) umfasst.

9. Halterung nach Anspruch 8, **dadurch gekennzeichnet, dass** die Klinke (26) an der von der Trägerplatte (8) abgewandten Seite der Schließe (25) liegt.

10. Halterung nach Anspruch 8 oder 9, **dadurch gekennzeichnet, dass** der Riemen (23) an seiner von der Trägerplatte (8) abgewandten Seite ferner eine Rutschsicherung (27) zur Anlage an dem Fahrzeugteil (4) hat.

## Claims

1. A holder for anchoring a document which has to be carried visibly to a vehicle, particularly to a single-track motor vehicle, **characterised by** the combination of:
a carrier portion (5) having a carrier plate (8) and a mounting collar (9) for mounting the carrier portion (5) to a part (4) of the vehicle (1);
a covering cap (6) which can be anchored to the carrier plate (8) by means of a snap connection (12) interposing the document, the covering cap having a transparent view window (10) and a rim (11) circumferentially framing the carrier plate (8); and
a seal (7) which can be inserted between the covering cap (6) and the carrier plate (8);
wherein the carrier plate (8) in its edge area has sealing ridges (13) projecting in the direction of the covering cap (6) for pressing the seal (7) against the covering cap (6).

2. The holder according to claim 1, **characterised in that** the sealing ridges (13) form a surrounding frame.

3. The holder according to claim 1 or 2, **characterised in that** the snap connection (12) is formed by snap hooks (14) distributed over the periphery inside the rim (11) and projecting from the covering cap (6) and by corresponding snap openings (15) in the carrier plate (8) outside the sealing ridges (13), behind which openings the snap hooks (14) lock inseparably.

4. The holder according to claim 3, **characterised in that** the snap hooks (14) have strutting limbs (17) which lock inseparably behind the snap openings (15).

5. The holder according to claim 3 or 4, **characterised in that** the snap hooks (14) are not rotation-symmetrically distributed over the periphery of the covering cap (6).

6. The holder according to any one of claims 1 to 5, **characterised in that** the carrier plate (8) and the mounting collar (9) are unitarily produced from plastic.

7. The holder according to any one of claims 1 to 6, **characterised in that** the covering cap (6) has guiding ridges (22) for the document (2) which project in the direction of the carrier plate (8).

8. The holder according to any one of claims 1 to 7, **characterised in that** the mounting collar (9) comprises a flexible strap (23) with saw teeth (24) and a buckle (25) with a catch (26).

9. The holder according to claim 8, **characterised in that** the catch (26) is located on the side of the buckle (25) facing away from the carrier plate (8).

10. The holder according to claim 8 or 9, **characterised in that** the strap (23) further has an antiskid device (27) on its side facing away from the carrier plate (8) for abutting against the vehicle part (4).

## Revendications

1. Dispositif de support destiné à l'ancrage d'un document à apposer de manière visible sur un véhicule, notamment sur un véhicule automobile à voie unique, **caractérisé par** la combinaison à base :
d'une partie de support (5) dotée d'une plaque de support (8) et d'une manchette de fixation (9) prévue pour le montage de la partie de support (5) sur une partie (4) du véhicule (1) ;
d'un capuchon de recouvrement (6) avec un champ de vision (10) transparent et un rebord (11) entourant la plaque de support (8), pouvant être ancré à l'aide d'une liaison par encliquetage (12) moyennant l'intercalage du document sur la plaque de support (8) ; et
un joint (7) pouvant être inséré entre le capuchon de recouvrement (6) et la plaque de support (8) ;
où la plaque de support (8) a des nervures d'étanchéité (13) dépassant dans sa zone de bordure en direction du capuchon de recouvrement (6) pour la compression du joint (7) sur le capuchon de recouvrement (6).

2. Dispositif de support selon la revendication 1, **caractérisé en ce que** les nervures d'étanchéité (13) forment un encadrement périphérique.

3. Dispositif de support selon la revendication 1 ou la revendication 2, **caractérisé en ce que** la liaison par encliquetage (12) est formée par des crochets d'encliquetage (14), distribués sur le périmètre à l'intérieur de la bordure (11) et dépassant du capuchon de recouvrement (6), et d'ouvertures d'encliquetage (15) dans la plaque de support (8), leur correspondant, se situant à l'extérieur par rapport aux nervures d'étanchéité (13), derrière lesquelles les crochets d'encliquetage (14) peuvent se verrouiller de manière inamovible.

4. Dispositif de support selon la revendication 3, **caractérisé en ce que** les crochets d'encliquetage (14) ont des pattes d'extension (17) lesquelles se verrouillent de manière inamovible derrière les ouvertures d'encliquetage (15).

5. Dispositif de support selon la revendication 3 ou la revendication 4, **caractérisé en ce que** les crochets d'encliquetage (14) sont distribués de manière non symétrique en rotation sur le périmètre du capuchon de recouvrement (6).

6. Dispositif de support selon l'une des revendications 1 à 5, **caractérisé en ce que** la plaque de support (8) et la manchette de fixation (9) sont fabriquées d'un seul tenant en matière plastique.

7. Dispositif de support selon l'une des revendications 1 à 6, **caractérisé en ce que** le capuchon de recouvrement (6) a des nervures de guidage (22) pour le document (2) dépassant en direction de la plaque de support (8).

8. Dispositif de support selon l'une des revendications 1 à 7, **caractérisé en ce que** la manchette de fixation (9) comprend une courroie souple (23) avec des dents de scie (24) et un boucle (25) avec un cliquet (26).

9. Dispositif de support selon la revendication 8, **caractérisé en ce que** le cliquet (26) se situe sur le côté du boucle (25) opposé à la plaque de support (8).

10. Dispositif de support selon la revendication 8 ou la revendication 9, **caractérisé en ce que** la courroie (23) a en outre une protection contre le désencrage (27) sur son côté opposé à la plaque de support (8) pour le montage sur la partie de véhicule (4).
